# EUROPEAN PATENT SPECIFICATION

(11) **EP 3 471 005 B1**
(45) Date of publication and mention of the grant of the patent: **03.11.2021**
(21) Application number: 17196277.2
(22) Date of filing: 13.10.2017
(51) Int. Cl.: G06N 3/02, G06N 20/00, G06F 21/53, G06F 21/57, G06F 21/62, H04L 29/06, H04W 12/02, G06N 3/04, G06N 3/08

(54) **ARTIFICIAL NEURAL NETWORK**
KÜNSTLICHES NEURONALES NETZWERK
RÉSEAU NEURONAL ARTIFICIEL

(43) Date of publication of application: 17.04.2019
(73) Proprietor: Nokia Technologies Oy, 02610 Espoo (FI)
(72) Inventor: BITAULD, David, Cambridge, CB5 8DR (GB); BAYKANER, Khan Richard, Upper Cambourne, Cambridgeshire CB23 6BL (GB)
(74) Representative: Laine IP Oy

(56) References cited:
- EP-A1- 3 475 868
- US-A1- 2002 173 295
- MIKHAIL I GOFMAN ET AL: "Multimodal biometrics for enhanced mobile device security", COMMUNICATIONS OF THE ACM, ASSOCIATION FOR COMPUTING MACHINERY, INC, UNITED STATES, vol. 59, no. 4, 23 March 2016 (2016-03-23) , pages 58-65, XP058078679, ISSN: 0001-0782, DOI: 10.1145/2818990
- DUCRAY BENOIT ET AL: "Gesture recognition implemented on a personal limited device", 2017 8TH INTERNATIONAL CONFERENCE ON INFORMATION AND COMMUNICATION SYSTEMS (ICICS), IEEE, 4 April 2017 (2017-04-04), pages 171-176, XP033094358, DOI: 10.1109/IACS.2017.7921966 [retrieved on 2017-05-08]
- REZA SHOKRI ET AL: "Privacy-Preserving Deep Learning", PROCEEDINGS OF THE 22ND ACM SIGSAC CONFERENCE ON COMPUTER AND COMMUNICATIONS SECURITY, CCS '15, 12 October 2015 (2015-10-12), pages 1310-1321, XP055394102, New York, New York, USA DOI: 10.1145/2810103.2813687 ISBN: 978-1-4503-3832-5

## Description

### FIELD

The present invention relates to the field of training and/or using artificial neural networks.

### BACKGROUND

Machine learning and machine recognition finds several applications, such as, for example, automated passport control at airports, where a digital image of a person's face may be compared to biometric information, stored in a passport, characterizing the person's face.

Another example of machine recognition is in handwriting or printed document text recognition, to render contents of books searchable, for example. A yet further example is pedestrian recognition, wherein, ultimately, a self-driving car is thereby seen as being enabled to become aware a pedestrian is ahead and the car can avoid running over the pedestrian.

In addition to visual recognition, spoken language may be the subject of machine recognition. When spoken language is recognized, it may be subsequently input to a parser to provide commands to a digital personal assistant, or it may be provided to a machine translation program to thereby obtain a text in another language, corresponding in meaning to the spoken language.

Machine recognition technologies employ algorithms engineered for this purpose. For example, artificial neural networks may be used to implement machine vision applications. Artificial neural networks may be referred to herein simply as neural networks. Neural networks may be trained using training data, and subsequently the networks may be run using live data. For example, where a neural network is designed to assist a doctor in diagnosing patients, the training data may consist of medical imaging images of patients, concerning which it is known if the patient has a specific condition, such as a vascular anomaly or a tumour. Once the network is trained, it may be used on images of patients that are yet to be diagnosed.

The training data may be sensitive, such as in the medical application mentioned above. Handling sensitive data requires precautions to prevent the data from being accessed by parties who are not authorized to access it.

Document "Multimodal biometrics for enhanced mobile device security" (Mikhail Gofman, COMMUNICATIONS OF THE ACM, ASSOCIATION FOR COMPUTING MACHINERY, INC, USA, vol. 59, no. 4, March 23, 2016) discloses solutions for enhancing mobile device security, wherein a linear discriminant analysis, LDA, mechanism is used on a secure element. Document "Gesture recognition implemented on a personal limited device" (Benoit Ducray, 2017 8TH INTERNATIONAL CONFERENCE ON INFORMATION AND COMMUNICATION SYSTEMS (ICICS), IEEE, April 4, 2017) discloses using gesture recognition solutions on a smart card, based on a dynamic time warping, DTW, algorithm. Document US2017372226 discloses a multiparty privacy-preserving machine learning system which uses a trusted execution environment. Document XP055394102 discloses privacy preserving neural networks, wherein a random noise is added to prevent from leaking too much information about the training data.

### SUMMARY OF THE INVENTION

According to some aspects, there is provided the subject-matter of the independent claims. Some embodiments are defined in the dependent claims.

According to a first aspect of the present invention, there is provided an apparatus comprising an apparatus comprising means for storing training data in a memory, means for providing a trusted execution environment, and means for running, in the trusted execution environment, a training process configured to obtain parameters of a neural network, using the training data, wherein the apparatus is configured to add, in the trusted execution environment, after the parameters of the neural network have been optimized, random noise to the parameters of the neural network, and to provide the parameters to a computer distinct from the apparatus after the adding of the random noise.

Various embodiments of the first aspect may comprise at least one feature from the following bulleted list:
- the apparatus is configured to provide the trusted execution environment and another execution environment, the trusted execution environment being provided with at least one hardware and/or software security feature not provided for the another execution environment
- the means for storing is accessible to at least two execution environments provided by the at least one processor
- the apparatus is configured to decrypt the training data before using it in the training process
- the apparatus is further configured to obtain a measurement of a computer program of the training process, and to cause the measurement to be provided to a party outside of the apparatus
- the measurement comprises obtaining a hash of the computer program of the training process
- the apparatus is configured to run the neural network, once the parameters have been obtained, in the trusted execution environment
- the apparatus is configured to cause randomly generated noise to be added to a result obtained from the neural network, before causing the response to be transmitted from the apparatus
- the means for running are configured to run the neural network in the trusted execution environment at most a preconfigured number of times

According to a second aspect of the present invention, there is provided a method, comprising storing training data in a memory, providing a trusted execution environment, and running, in the trusted execution environment, a training process configured to obtain parameters of a neural network, using the training data and by adding, in the trusted execution environment, after the parameters of the neural network have been optimized, random noise to the parameters of the neural network, and providing the parameters to a computer distinct from the apparatus after the adding of the random noise..

Various embodiments of the second aspect may comprise at least one feature corresponding to a feature from the preceding bulleted list laid out in connection with the first aspect.

According to a third aspect of the present invention, there is provided an apparatus comprising a memory configured to store a computer program, at least one processor configured to obtain a measurement of the computer program, to verify the measurement is consistent with a measurement value received from a device, and responsive to the measurement being consistent with the measurement value, to provide training data to a trusted execution environment of the device, the computer program being configured to cause, in the trusted execution environment, a training process to obtain parameters of a neural network, using the training data.

According to a fourth aspect of the present invention, there is provided a method comprising storing a computer program, obtaining a measurement of the computer program, verifying the measurement is consistent with a measurement value received from a device, and responsive to the measurement being consistent with the measurement value, providing training data to a trusted execution environment of the device, the computer program being configured to cause, in the trusted execution environment, a training process to obtain parameters of a neural network, using the training data.

According to a fifth aspect of the present invention, there is provided an apparatus comprising means for storing training data in a memory, means for providing a trusted execution environment, and means for running, in the trusted execution environment, a training process configured to obtain parameters of a neural network, using the training data.

According to a sixth aspect of the present invention, there is provided an apparatus comprising means for storing a computer program, means for obtaining a measurement of the computer program, means for verifying the measurement is consistent with a measurement value received from a device, and means for, responsive to the measurement being consistent with the measurement value, providing training data to a trusted execution environment of the device, the computer program being configured to cause, in the trusted execution environment, a training process to obtain parameters of a neural network, using the training data.

(deleted)

(deleted)

According to a ninth aspect of the present invention, there is provided a computer program configured to cause a method in accordance with either the second or the fourth aspect to be performed, when run.

### BRIEF DESCRIPTION OF THE DRAWINGS

FIGURE 1 illustrates an example embodiment in accordance with at least some embodiments of the present invention;
FIGURE 2 illustrates an example embodiment in accordance with at least some embodiments of the present invention;
FIGURE 3 illustrates an example apparatus capable of supporting at least some embodiments of the present invention;
FIGURE 4 illustrates signalling in accordance with at least some embodiments of the present invention, and
FIGURE 5 is a flow graph of a method in accordance with at least some embodiments of the present invention.

### EMBODIMENTS

Training a neural network may be performed in a trusted execution environment. The trusted execution environment may be isolated from another execution environment of the processor or processing system. Processes run in the trusted execution environment may be isolated from each other by software and/or hardware architecture of the processor. Processes run in the trusted execution environment may be isolated, by the hardware architecture of the processor, from processes run by the processor outside the trusted execution environment. For example, a normal operating system may be so isolated from the trusted execution environment. Thus, sensitive information may be used in training the neural network with a reduced risk of the sensitive training data being inadvertently disclosed to potentially malicious parties. The processor architecture may provide auditability of the trusted execution environment and/or processes therein.

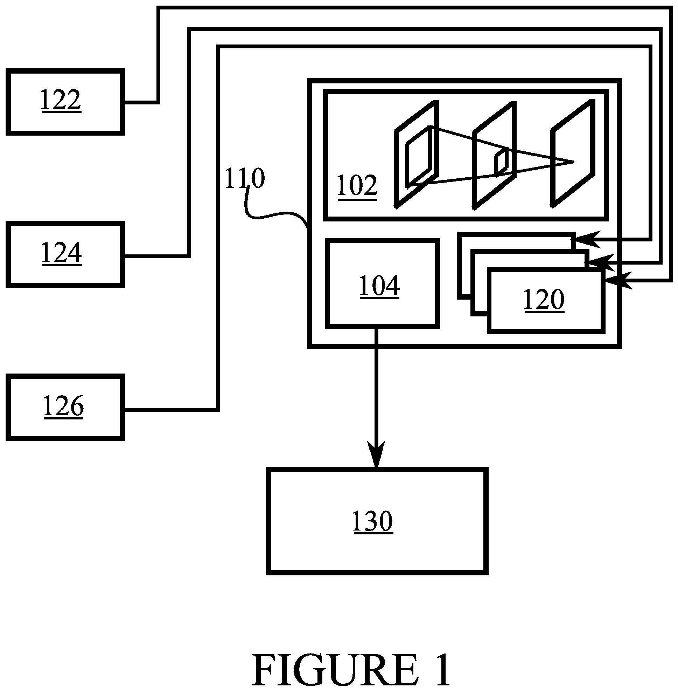

FIGURE 1 illustrates an example embodiment in accordance with at least some embodiments of the present invention. Data providers 122, 124 and 126 may comprise, for example, entities storing sensitive data. Examples of these include the files of medical researchers or research institutes, files of military contractors or consumer data repositories with personal data. Specifically three data providers is merely a non-limiting example. The sensitive data may comprise, for example, patient-related data such as imaging data of vascular anomalies or tumours, or the sensitive data may comprise, for example, radar return data of various aircraft or aircraft parts. The data providers may be willing to share their data for the purpose of training a neural network, however, they may be unwilling to publish their data.

Data providers 122, 124 and 126 may provide their data to device 110 in a secure way, for example using secured interfaces and/ or cryptography, such as public-key cryptography. When using public-key cryptography, a public key of device 110 may be provided to the data providers, which may use it to encrypt their data before providing it to device 110. Alternatively, the data providers may encrypt, using the public key of device 110, a key used in encrypting the data using a symmetric encryption algorithm, which may save processing time with respect to encrypting the data directly with the public key.

Training data 120 may be stored in a memory of device 110 in encrypted form, for example, device 110 may have an encrypted memory for secure storage of sensitive information. Training data 120 may be the data of the one or various data providers, once it is received in device 110.

Device 110 may be configured to train a neural network 102, using training data 120 received from data providers 122, 124 and 126. The data provided by the data providers may be used as training data in a process, wherein neural network 102 is repeatedly run with the training data, until it converges into a state where it has adapted to patterns present in the training data. This may be referred to as supervised learning, since the correct classification of elements comprised in the training data is known. The training may be based, for example, on minimization of a loss function. A loss function may be a function of parameters 104 of the neural network, wherefore its minimization may thus become a multidimensional minimization problem, which is well known in mathematics. For example, the gradient descent method, Newton's method or the Levenberg-Marquardt algorithm may be employed to find the neural network parameter values that correspond to a minimum of the loss function. Backpropagation may be employed, where appropriate, to improve the training process.

Alternatively or in addition to supervised learning, unsupervised learning may be employed in the training process. Examples of unsupervised learning methods include Hebbian learning and generative adversarial networks. In unsupervised learning, the classification of elements in the training data need not be known in advance.

Once parameters 104 have been optimized in the neural network training process, the neural network may be ready for use with live data, that is, data that has not yet been classified. The neural network may be used to classify newly obtained data, or to verify classification of such data that is performed by humans. For example, a pathologist may employ a neural network to double-check he doesn't miss samples which contain malignant cells. The neural network may be run on a separate computer 130, or in device 110. If the neural network is run on computer 130, the parameters 104 may be provided to this computer 130.

In case the parameters 104 of the neural network are provided from device 110, they may be mixed with random noise to obscure the training data 120 underlying the trained parameters 104. On the other hand, in case the neural network is run in device 110, parameters 104 may be left optimized, enhancing thereby the performance of the neural network, and results obtained from the neural network may, instead, be mixed with random noise before the results are provided from device 110. In some embodiments, device 110 is configured to provide only a preconfigured number of responses with neural network 102, since each response may be seen as leaking information concerning training data 120. Once the preconfigured number has been reached, device 110 will thereafter no longer provide responses with neural network 102, to protect privacy of data providers 122, 124 and 126.This will be described below.

Device 110 may comprise a trusted execution environment, TEE. A TEE may comprise a secure and/or isolated area of a main processor or processing core. A TEE may provide isolated execution, integrity protection and/or confidentiality to assets therein. A TEE may offer an execution space with an enhanced security level with respect to another execution environment of the processor or processing core.

The security level of the TEE may be enhanced with respect to the other execution environment due to at least one hardware and/or software security feature provided by the processor running the TEE but not provided for the other execution environment. Examples of possible hardware security features include isolation of at least one part of the processing resource and, at least one isolated memory domain to provide shielded execution of the TEE code, the possibility to perform a trustworthy measurement of the TEE, such as a hash function, for example, and the possibility to store this measurement in an isolated register. Examples of possible software security features include a separate virtualized processor, cryptographic signatures of executable code blocks and the possibility to provide a guaranty of the integrity of the TEE to a remote user such as, for example, by providing a cryptographically signed measurement result to the remote user.

Training neural network 102 in a TEE provided on device 110 provides the advantage that training data 120 is concealed from outside parties, not only during transmission to device 110 and during storage in device 110, but also during processing that necessarily takes place during the neural network training process. Consequently, device 110 may be used also for purposes other than the training of neural network 102 without compromising the training data.

The neural network 102 used may be, depending on the embodiment, of a suitable type. Feedforward neural networks comprise networks where connections between units comprised in the network do not form a cycle. An important example of feedforward neural networks is the convolutional neural network, where a filter is applied to an input layer area, known as a receptive field, in a convolution operation, to obtain an element value for a subsequent layer. A neural network may comprise several convolutional layers, where a receptive field for each element value for the subsequent layer is less than the entire preceding layer. Such neural networks may further comprise fully connected layers, where every neuron is connected to every neuron in a preceding layer. Convolutional neural networks are usable in image recognition, for example.

Recurrent neural networks, on the other hand, involve networks where connections between units form a directed cycle. Recurrent networks, which may use their internal memory in processing input sequences, may be useful in speech recognition, for example. An example of a specific architecture of a recurrent neural network is the long short-term memory architecture, which was first proposed in 1997. Recursive neural networks, on the other hand, are deep neural networks where the same weights are applied recursively over a structure. Recursive networks find application in processing natural language, for example.

The advantages of the described embodiments are threefold: firstly, isolating the training data form the neural network service provider and any other third party, secondly, ensuring the released information preserves the privacy of the data providers, and thirdly, providing the data providers with a proof of the two first aspects. Some embodiments of the invention may address only a subset of these three advantages.

The first advantage is addressed by training the neural network inside a TEE. The connectivity of the surrounding network may be public and may be reflected in the software code running inside the TEE. However, parameters 104 that are the result of the training remain hidden.

The second advantage is addressed by programming measures, such as differential privacy mechanisms, that protect privacy of the data providers. This may comprise adding an appropriate amount of random noise to any released information. These measures may also part of the software code running in the TEE. The architecture of the software may be public. In general, differential privacy refers to a loss of privacy that individuals incur as a result of their private data being used in creating a data product.

The third advantage is addressed with a remote attestation mechanism. The processor running the TEE may be provided with a trusted computing base, TCB, which may be configured to measure the software code running in the TEE. This measurement may comprise obtaining a hash of the software code and/or the log files that are generated during the training of the TEE. This measurement may then be provided to the data provider who can verify that it corresponds to the software code that was made public by the service provider. The provenance of this attestation can be authenticated with the help of a hardware verification authority, for example the processor manufacturer. Once the software code is written it may be sent to a TEE-enabled device 110 and launched. A copy of the software code is made accessible to the potential data providers.

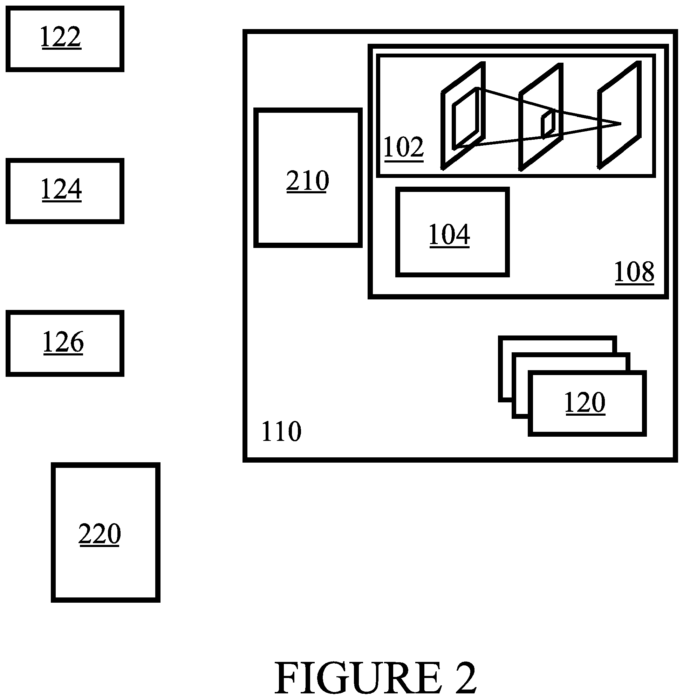

FIGURE 2 illustrates an example embodiment in accordance with at least some embodiments of the present invention. Like numbering denotes like structure as in the embodiments of FIGURE 1. Device 110 comprises an untrusted operating system having a normal execution environment and a TEE 108. The process of training the neural network 102 takes place in TEE 108. Parameters 104 are the result of the training process, the parameters 104 being in TEE 108 during the training process of neural network 102. A trusted computing base, TCB, 210, is provided in device 210. In general, a TCB 210 may be seen as a set of hardware, firmware and/or software that is critical to security. Certification authority 220 may comprise the manufacturer of a processor providing TEE 108 and/or TCB 210, for example. The TCB may be comprised in the processor architecture, for example. For example, the circuitry of the TCB may be comprised in the processor. The TCB may be a part of the processor that is used in providing the TEE.

Initially, a service provider may provide to data providers 122, 124, 126 a copy of the software code that will run in TEE 108 to train the neural network. The copy of the software code may be provided in source code form, for example. This software code may comprise aspects relating to network connectivity, privacy mechanisms that will be applied before releasing any information, and/or cryptographic mechanisms that will be used between data providers 122, 124, 126 and TEE 108. Along with the copy of the software code, an identifier of TEE 108 may be provided, such as, for example, a public key of TEE 108 in the sense of a public key cryptosystem. Examples of public key cryptosystems include the ElGamal and RSA cryptosystems.

TCB 210 may perform a measurement, such as a derivation of a hash value, on the software code and/or log files in TEE 108, and provide a result of the measurement, such as the hash value, to data providers 122, 124 and 126. The measurement may be signed by the TCB with a secret key to certify its origin. The data providers may then verify the measurement corresponds to the software code provided by the service provider, for example by checking the hash value received from TCB 210 matches with a hash value obtained from the software code received from the service provider. To do this, the data providers may review the software code and compile it to obtain an executable, for example. Then the data provider may derive the hash value of the code together with the expected log files. Alternatively, the measurements may be obtained from source code and TEE 108 may compile the source code after obtaining the measurement, to obtain an executable that is usable in training neural network 102. TCB 210 may further provide a public key of TEE 108, for example in case the service provider has not provided one.

Data providers 122, 124 and 126 may verify the provenance of the measurement value with reference to a hardware certification authority, which may comprise, for example, the processor manufacturer. The signature of the measurement performed by the TCB can be authenticated by the manufacturer as originating from a processor fabricated by said manufacturer. The training data 120 may then be provided to device 110, using a secured data delivery method, for example. The delivering may be secured, at least in part, using a public key of TEE 108, for example. Optionally, the data providers may also be identified with a public key and/or be authenticated with reference to a certification authority. Once in device 110, training data 120 may be stored in encrypted form, for example in the main memory of device 110, or externally.

Once the neural network parameters 104 are optimized there are two possibilities to use the neural network, while ensuring privacy. In a first embodiment, the neural network 102 including its parameters 104 is released publicly. In this case, appropriate random noise may be added to parameters 104 before their release to ensure privacy. However, this method discloses information of high dimensionality, which would require addition of a lot of noise in order to satisfy applicable differential privacy criteria. In some cases this might make the model too inaccurate to be very useful. An alternative implementation of this might be to use a so-called 'student-teacher' approach to train a more private network, such as in [1]. These systems work by training an ensemble of 'teachers' on subsets of the private data; after the ensemble is trained a 'student' is trained to predict the aggregate of the output of the 'teachers' on publicly available, and potentially unlabeled, data. In this way, the 'student' network can never be reverse engineered to reveal the original private data, because it was never trained on these data, but the student will still be able to make predictions equivalent to the ensemble of 'teachers' that were trained on the private data.

In a second embodiment, the trained neural network 102 remains inside the TEE 108, or another TEE, during its use. In that case, for every query that is made to the neural network 102, noise may be added to its output, rather than its parameters as in the first embodiment. In this case, the released information has a smaller dimensionality than in the first embodiment. This requires less noise to be added, resulting in improved performance relative to the first embodiment.

However in this second embodiment many queries may be needed, as opposed to the first embodiment where the parameters are released. Due to the composability property of differential privacy, the level of privacy diminishes every time a query is made. The TEE code may be programmed to impose a lower bound for the privacy measure and block the neural network, or delete it, when this level is reached. The lower bound on privacy may correspond to a higher bound in the number of allowed queries. In other words, the system may be arranged to run the neural network in the trusted execution environment at most a preconfigured number of times. Once the preconfigured number of times have been run, the processor may refuse further queries or requests to run the neural network.

Before using the system, the data provider may request a remote attestation to the TEE. This may provide a proof that the code running inside the TEE is indeed the one that was claimed. It is then possible for whoever is using the system to judge whether the appropriate measures to protect privacy are coded in the program.

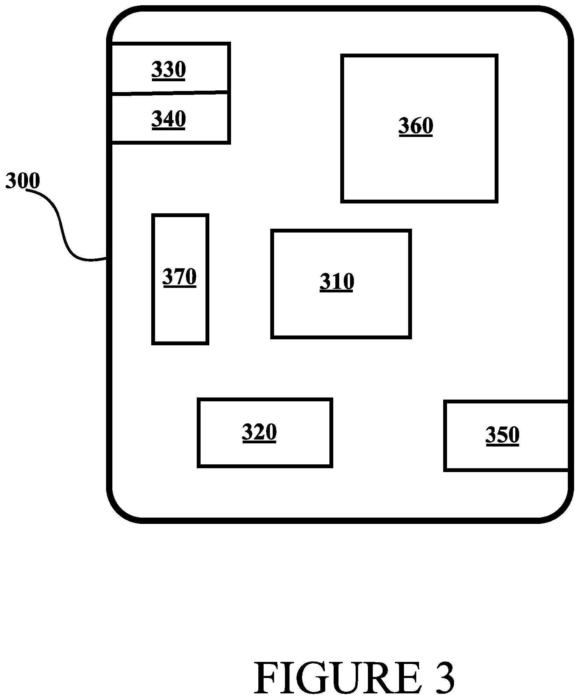

FIGURE 3 illustrates an example apparatus capable of supporting at least some embodiments of the present invention. Illustrated is device 300, which may comprise, for example, device 110 of FIGURE 1 or FIGURE 2. Comprised in device 300 is processor 310, which may comprise, for example, a single- or multi-core processor wherein a single-core processor comprises one processing core and a multi-core processor comprises more than one processing core. Processor 310 may comprise, in general, a control device. Processor 310 may comprise more than one processor. Processor 310 may be a control device. A processing core may comprise, for example, a Cortex-A8 processing core manufactured by ARM Holdings or a Steamroller processing core produced by Advanced Micro Devices Corporation. Processor 310 may comprise at least one Qualcomm Snapdragon and/or Intel Atom processor. Processor 310 may comprise at least one application-specific integrated circuit, ASIC. Processor 310 may comprise at least one field-programmable gate array, FPGA. Processor 310 may be means for performing method steps in device 300. Processor 310 may be configured, at least in part by computer instructions, to perform actions. Processor 310 may provide a normal execution environment and a separate trusted execution environment.

Device 300 may comprise memory 320. Memory 320 may comprise random-access memory and/or permanent memory. Memory 320 may comprise at least one RAM chip. Memory 320 may comprise solid-state, magnetic, optical and/or holographic memory, for example. Memory 320 may be at least in part accessible to processor 310. Memory 320 may be at least in part comprised in processor 310. Memory 320 may be means for storing information. Memory 320 may comprise computer instructions that processor 310 is configured to execute. When computer instructions configured to cause processor 310 to perform certain actions are stored in memory 320, and device 300 overall is configured to run under the direction of processor 310 using computer instructions from memory 320, processor 310 and/or its at least one processing core may be considered to be configured to perform said certain actions. Memory 320 may be at least in part comprised in processor 310. Memory 320 may be at least in part external to device 300 but accessible to device 300.

Device 300 may comprise a transmitter 330. Device 300 may comprise a receiver 340. Transmitter 330 and receiver 340 may be configured to transmit and receive, respectively, information in accordance with at least one cellular or non-cellular standard. Transmitter 330 may comprise more than one transmitter. Receiver 340 may comprise more than one receiver. Transmitter 330 and/or receiver 340 may be configured to operate in accordance with global system for mobile communication, GSM, wideband code division multiple access, WCDMA, 5G, long term evolution, LTE, IS-95, wireless local area network, WLAN, Ethernet and/or worldwide interoperability for microwave access, WiMAX, standards, for example.

Device 300 may comprise a near-field communication, NFC, transceiver 350. NFC transceiver 350 may support at least one NFC technology, such as NFC, Bluetooth, Wibree or similar technologies.

Device 300 may comprise user interface, UI, 360. UI 360 may comprise at least one of a display, a keyboard, a touchscreen, a vibrator arranged to signal to a user by causing device 300 to vibrate, a speaker and a microphone. A user may be able to operate device 300 via UI 360, for example to configure neural network training processes.

Device 300 may comprise or be arranged to accept a user identity module 370. User identity module 370 may comprise, for example, a subscriber identity module, SIM, card installable in device 300. A user identity module 370 may comprise information identifying a subscription of a user of device 300. A user identity module 370 may comprise cryptographic information usable to verify the identity of a user of device 300 and/or to facilitate encryption of communicated information and billing of the user of device 300 for communication effected via device 300.

Processor 310 may be furnished with a transmitter arranged to output information from processor 310, via electrical leads internal to device 300, to other devices comprised in device 300. Such a transmitter may comprise a serial bus transmitter arranged to, for example, output information via at least one electrical lead to memory 320 for storage therein. Alternatively to a serial bus, the transmitter may comprise a parallel bus transmitter. Likewise processor 310 may comprise a receiver arranged to receive information in processor 310, via electrical leads internal to device 300, from other devices comprised in device 300. Such a receiver may comprise a serial bus receiver arranged to, for example, receive information via at least one electrical lead from receiver 340 for processing in processor 310. Alternatively to a serial bus, the receiver may comprise a parallel bus receiver.

Device 300 may comprise further devices not illustrated in FIGURE 3. For example, where device 300 comprises a smartphone, it may comprise at least one digital camera. Some devices 300 may comprise a back-facing camera and a front-facing camera, wherein the back-facing camera may be intended for digital photography and the front-facing camera for video telephony. Device 300 may comprise a fingerprint sensor arranged to authenticate, at least in part, a user of device 300. In some embodiments, device 300 lacks at least one device described above. For example, some devices 300 may lack a NFC transceiver 350 and/or user identity module 370.

Processor 310, memory 320, transmitter 330, receiver 340, NFC transceiver 350, UI 360 and/or user identity module 370 may be interconnected by electrical leads internal to device 300 in a multitude of different ways. For example, each of the aforementioned devices may be separately connected to a master bus internal to device 300, to allow for the devices to exchange information. However, as the skilled person will appreciate, this is only one example and depending on the embodiment various ways of interconnecting at least two of the aforementioned devices may be selected without departing from the scope of the present invention.

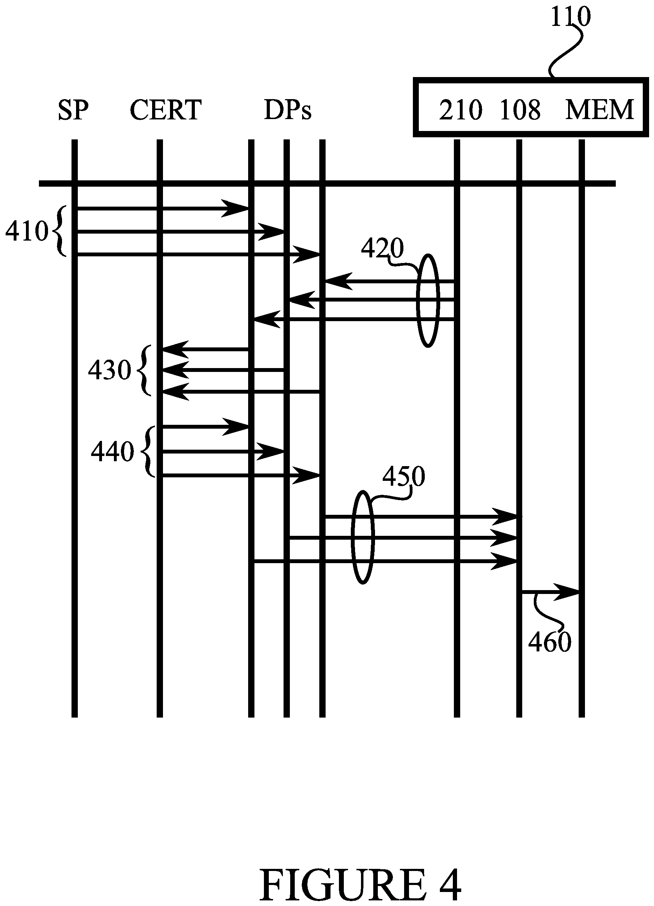

FIGURE 4 illustrates signalling in accordance with at least some embodiments of the present invention. On the vertical axes are disposed, from the left, service provider SP, certification authority CERT, the data providers DPs, and device 110 comprising TCB 210, TEE 108 and a memory MEM. Time advances from the top toward the bottom.

In phase 410 of the procedure, the data providers obtain a copy of the software code used in neural network training from a service provider. This software code may be in source code form, for example, from which the data providers may derive executable code by compiling. The source code may be reviewed by the data providers, for example.

In phase 420, TCB 210 provides to the data providers the result of the measurement performed on the software in TEE 108. The measurement has been described herein above. The data providers may compare the measurement result received in phase 420 to a measurement they perform on the software code, or on executable code derived therefrom. In case the results match, the data providers may have confidence the software running in TEE 108 matches that obtained from the service provider SP in phase 410.

In phase 430, the data providers may refer to a certification authority CERT, to verify the provenance of the message received in phase 420. For example, the data providers may request that certification authority CERT verifies a cryptographic signature over the measurement result is valid. As noted above, the certification authority may be the processor manufacturer, for example. Certification authority CERT responds to the data providers in phase 440.

In case the data providers can, based on the above, trust TCB 210, they may provide their data to TEE 108, using a suitable secured method. This is illustrated in FIGURE 4 as phase 450. Once TEE 108 has the data, it may store it securely on memory MEM, which is illustrated in FIGURE 4 as phase 460.

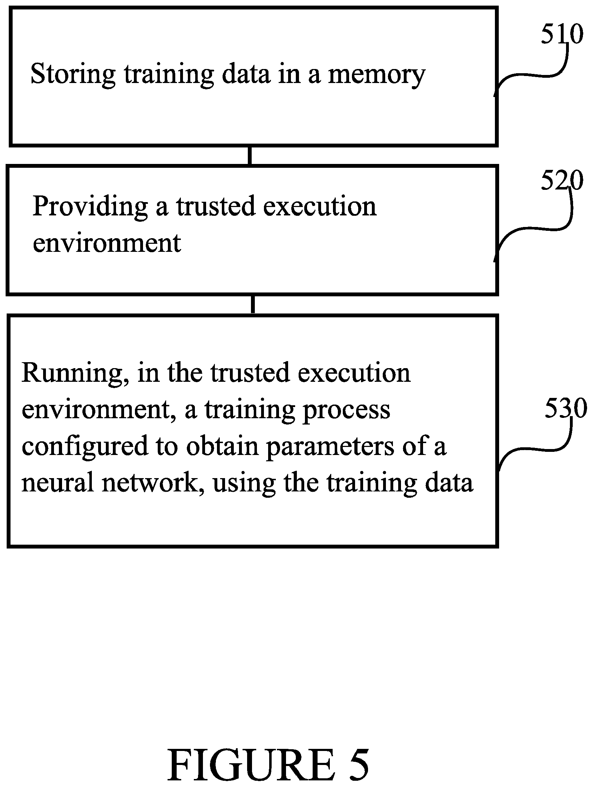

FIGURE 5 is a flow graph of a method in accordance with at least some embodiments of the present invention. The phases of the illustrated method may be performed in TEE 108 of device 110, for example.

Phase 510 comprises storing training data in a memory. Phase 520 comprises providing a trusted execution environment. Finally, phase 530 comprises running, in the trusted execution environment, a training process configured to obtain parameters of a neural network, using the training data.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some embodiments of the present invention find industrial application in machine learning.

### ACRONYMS LIST

- TCB: Trusted computing base
- TEE: Trusted execution environment

### REFERENCE SIGNS LIST

| | |
|---|---|
| 110 | Device |
| 102 | Neural network |
| 104 | Parameters of neural network 102 |
| 120 | Training data |
| 122, 124, 126 | Data providers |
| 108 | Trusted execution environment |
| 210 | Trusted computing base |
| 220 | Certification authority |
| 300 - 370 | Structure of the apparatus of FIGURE 3 |
| 410 - 460 | Phases of signaling of FIGURE 4 |
| 510 - 530 | Phases of the method of FIGURE 5 |

### CITATION LIST

[1] "Semi-Supervised Knowledge Transfer for Deep Learning from Private Training Data", Nicolas Papernot et al. International Conference on Learning Representations 2017, arXiv: 1610.05755v4, 3 Mar 2017

## Claims

1. An apparatus (110, 300) comprising:
- means (320) for storing training data in a memory;
- means (310) for providing a trusted execution environment,
- means (310) for running, in the trusted execution environment, a training process configured to obtain parameters of a neural network, using the training data, **characterized by**, wherein
the apparatus is configured to add, in the trusted execution environment, after the parameters of the neural network have been optimized, random noise to the parameters of the neural network, and to provide the parameters to a computer (130) distinct from the apparatus (110, 300) after the adding of the random noise.

2. The apparatus (110, 300) according to claim 1, wherein the apparatus (110, 300) further comprises means (310) for providing another execution environment, the trusted execution environment being provided with at least one hardware and/or software security feature not provided for the another execution environment.

3. The apparatus (110, 300) according to claim 1 or 2, wherein the means (320) for storing are accessible to at least two execution environments provided by the means (310) for providing the trusted execution environment and the means (310) for providing the another execution environment.

4. The apparatus (110, 300) according to any of claims 1 - 3, wherein the means (310) for providing the trusted execution environment are configured to decrypt the training data before using it in the training process.

5. The apparatus (110, 300) according to any of claims 1 - 4, wherein the means (310) for providing the trusted execution environment are further configured to obtain a measurement of a computer program of the training process, and to cause the measurement to be provided to a party outside of the apparatus (110, 300).

6. The apparatus (110, 300) according to claim 5, wherein the measurement comprises obtaining a hash of the computer program of the training process.

7. The apparatus (110, 300) according to any of claims 1- 6, wherein the means (310) for providing the trusted execution environment are configured to run the neural network, once the parameters have been obtained, in the trusted execution environment.

8. The apparatus (110, 300) according to claim 7, wherein the apparatus (110, 300) is configured to cause randomly generated noise to be added to a result obtained from the neural network, before causing the response to be transmitted from the apparatus (110, 300).

9. The apparatus (110, 300) according to claim 7 or 8, wherein apparatus (110, 300) is configured to run the neural network in the trusted execution environment at most a preconfigured number of times.

10. A method, comprising:
- storing (510) training data in a memory;
- providing (520) a trusted execution environment,
- running (530), in the trusted execution environment, a training process configured to obtain parameters of a neural network, using the training data **characterized by** adding, in the trusted execution environment, after the parameters of the neural network have been optimized, random noise to the parameters of the neural network, and providing the parameters to a computer (130) distinct from the apparatus (110, 300) after the adding of the random noise.

11. A computer program configured to cause a method in accordance with claim 10 to be performed, when run.

## Patentansprüche

1. Vorrichtung (110, 300), die Folgendes umfasst:
- ein Mittel (320) zum Speichern von Trainingsdaten in einem Speicher;
- ein Mittel (310) zum Bereitstellen einer vertrauenswürdigen Ausführungsumgebung,
- ein Mittel (310) zum Umsetzen eines Trainingsprozesses, der dazu ausgelegt ist, Parameter eines neuronalen Netzwerks zu erhalten, unter Verwendung der Trainingsdaten in der vertrauenswürdigen Ausführungsumgebung, **gekennzeichnet durch**, wobei
die Vorrichtung dazu ausgelegt ist, nachdem die Parameter des neuronalen Netzwerks optimiert wurden, in der vertrauenswürdigen Ausführungsumgebung Zufallsrauschen zu den Parametern des neuronalen Netzwerks hinzuzufügen und die Parameter nach Hinzufügen des Zufallsrauschens einem Computer (130), der sich von der Vorrichtung (110, 300) unterscheidet, bereitzustellen.

2. Vorrichtung (110, 300) nach Anspruch 1, wobei die Vorrichtung (110, 300) ferner ein Mittel (310) zum Bereitstellen einer anderen Ausführungsumgebung umfasst, wobei die vertrauenswürdige Ausführungsumgebung mit mindestens einem Hardware- und/oder Softwaresicherheitsmerkmal, das der anderen Ausführungsumgebung nicht bereitgestellt ist, ausgestattet ist.

3. Vorrichtung (110, 300) nach Anspruch 1 oder 2, wobei mindestens zwei Ausführungsumgebungen, die vom Mittel (310) zum Bereitstellen der vertrauenswürdigen Ausführungsumgebung und dem Mittel (310) zum Bereitstellen der anderen Ausführungsumgebung bereitgestellt werden, auf das Mittel (320) zum Speichern zugreifen können.

4. Vorrichtung (110, 300) nach einem der Ansprüche 1-3, wobei das Mittel (310) zum Bereitstellen der vertrauenswürdigen Ausführungsumgebung dazu ausgelegt ist, die Trainingsdaten zu entschlüsseln, bevor sie im Trainingsprozess verwendet werden.

5. Vorrichtung (110, 300) nach einem der Ansprüche 1-4, wobei das Mittel (310) zum Bereitstellen der vertrauenswürdigen Ausführungsumgebung ferner dazu ausgelegt ist, eine Messung eines Computerprogramms des Trainingsprozesses zu erhalten und zu bewirken, dass die Messung einer Partei außerhalb der Vorrichtung (110, 300) bereitgestellt wird.

6. Vorrichtung (110, 300) nach Anspruch 5, wobei die Messung das Erhalten eines Hash des Computerprogramms des Trainingsprozesses umfasst.

7. Vorrichtung (110, 300) nach einem der Ansprüche 1-6, wobei das Mittel (310) zum Bereitstellen der vertrauenswürdigen Ausführungsumgebung dazu ausgelegt ist, das neuronale Netzwerk in der vertrauenswürdigen Ausführungsumgebung umzusetzen, nachdem die Parameter erhalten wurden.

8. Vorrichtung (110, 300) nach Anspruch 7, wobei die Vorrichtung (110, 300) dazu ausgelegt ist zu bewirken, dass zufällig erzeugtes Rauschen zu einem Ergebnis, das vom neuronalen Netzwerk erhalten wird, hinzugefügt wird, bevor bewirkt wird, dass die Antwort von der Vorrichtung (110, 300) übertragen wird.

9. Vorrichtung (110, 300) nach Anspruch 7 oder 8, wobei die Vorrichtung (110, 300) dazu ausgelegt ist, das neuronale Netzwerk in der vertrauenswürdigen Ausführungsumgebung höchstens mit einer vorausgelegten Häufigkeit umzusetzen.

10. Verfahren, das Folgendes umfasst:
- Speichern (510) von Trainingsdaten in einem Speicher;
- Bereitstellen (520) einer vertrauenswürdigen Ausführungsumgebung,
- Umsetzen (530) eines Trainingsprozesses, der dazu ausgelegt ist, Parameter eines neuronalen Netzwerks zu erhalten, unter Verwendung der Trainingsdaten in der vertrauenswürdigen Ausführungsumgebung, **gekennzeichnet durch** Hinzufügen von Zufallsrauschen zu den Parametern des neuronalen Netzwerks in der vertrauenswürdigen Ausführungsumgebung, nachdem die Parameter des neuronalen Netzwerks optimiert wurden, und Bereitstellen der Parameter für einen Computer (130), der sich von der Vorrichtung (110, 300) unterscheidet, nachdem das Zufallsrauschen hinzugefügt wurde.

11. Computerprogramm, das dazu ausgelegt ist zu bewirken, dass ein Verfahren nach Anspruch 10 durchgeführt wird, wenn es umgesetzt wird.

## Revendications

1. Appareil (110, 300) comprenant :
- des moyens (320) destinés à stocker des données d'entraînement dans une mémoire ;
- des moyens (310) destinés à fournir un environnement d'exécution de confiance,
- des moyens (310) destinés à exécuter, dans l'environnement d'exécution de confiance, un processus d'entraînement configuré pour obtenir des paramètres de réseau neuronal, à l'aide des données d'entraînement,
**caractérisé par**, dans lequel :
l'appareil est configuré pour ajouter, dans l'environnement d'exécution de confiance, après que les paramètres du réseau neuronal ont été optimisés, du bruit aléatoire aux paramètres du réseau neuronal, et pour fournir les paramètres à un ordinateur (130) distinct de l'appareil (110, 300) après l'ajout du bruit aléatoire.

2. Appareil (110, 300) selon la revendication 1, dans lequel l'appareil (110, 300) comprend en outre des moyens (310) destinés à fournir un autre environnement d'exécution, l'environnement d'exécution de confiance étant pourvu d'au moins une fonction de sécurité matérielle et/ou logicielle non fournie pour l'autre environnement d'exécution.

3. Appareil (110, 300) selon la revendication 1 ou 2, dans lequel les moyens (320) de stockage sont accessibles à au moins deux environnements d'exécution fournis par les moyens (310) destinés à fournir l'environnement d'exécution de confiance et les moyens (310) destinés à fournir l'autre environnement d'exécution.

4. Appareil (110, 300) selon l'une quelconque des revendications 1 à 3, dans lequel les moyens (310) destinés à fournir l'environnement d'exécution de confiance sont configurés pour déchiffrer les données d'entraînement avant de les utiliser dans le processus d'entraînement.

5. Appareil (110, 300) selon l'une quelconque des revendications 1 à 4, dans lequel les moyens (310) destinés à fournir l'environnement d'exécution de confiance sont configurés en outre pour obtenir une mesure d'un programme informatique du processus d'entraînement, et pour faire en sorte que la mesure soit fournie à un correspondant à l'extérieur de l'appareil (110, 300).

6. Appareil (110, 300) selon la revendication 5, dans lequel la mesure comprend l'obtention d'un hachage du programme informatique du processus d'entraînement.

7. Appareil (110, 300) selon l'une quelconque des revendications 1 à 6, dans lequel les moyens (310) destinés à fournir l'environnement d'exécution de confiance sont configurés pour exécuter le réseau neuronal, une fois que les paramètres ont été obtenus, dans l'environnement d'exécution de confiance.

8. Appareil (110, 300) selon la revendication 7, dans lequel l'appareil (110, 300) est configuré pour faire en sorte que du bruit engendré de manière aléatoire soit ajouté à un résultat obtenu à partir du réseau neuronal avant de faire en sorte que la réponse soit transmise par l'appareil (110, 300).

9. Appareil (110, 300) selon la revendication 7 ou 8, dans lequel l'appareil (110, 300) est configuré pour exécuter le réseau neuronal dans l'environnement d'exécution de confiance au plus un nombre de fois configuré à l'avance.

10. Procédé comprenant les étapes suivantes :
- stocker (510) des données d'entraînement dans une mémoire ;
- fournir (520) un environnement d'exécution de confiance ;
- exécuter (530), dans l'environnement d'exécution de confiance, un processus d'entraînement configuré pour obtenir des paramètres d'un réseau neuronal, à l'aide des données d'entraînement, **caractérisé par** l'ajout, dans l'environnement d'exécution de confiance, après que les paramètres du réseau neuronal ont été optimisés, d'un bruit aléatoire aux paramètres du réseau neuronal, et la fourniture des paramètres à un ordinateur (130) distinct de l'appareil (110, 300) après l'ajout du bruit aléatoire.

11. Programme informatique configuré pour faire en sorte qu'un procédé selon la revendication 10 soit mis en œuvre, lorsqu'il est exécuté.
